(19) Europäisches Patentamt
European Patent Office
Office européen des brevets

(11) **EP 4 299 512 A1**

(12) **EUROPEAN PATENT APPLICATION**

(43) Date of publication:
**03.01.2024 Bulletin 2024/01**

(21) Application number: **23182482.2**

(22) Date of filing: **29.06.2023**

(51) International Patent Classification (IPC):
**C01B 25/26** (2006.01)     **C01B 25/37** (2006.01)

(52) Cooperative Patent Classification (CPC):
**C01B 25/372;** C01P 2004/03; C01P 2004/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022   JP 2022105785**
**19.05.2023   JP 2023083035**

(71) Applicant: **Fujimi Incorporated**
**Kiyosu-shi, Aichi 452-8502 (JP)**

(72) Inventors:
• **NOMURA, Ryo**
**Aichi, 452-8502 (JP)**
• **ASHITAKA, Keiji**
**Aichi, 452-8502 (JP)**
• **MIWA, Naoya**
**Aichi, 452-8502 (JP)**

(74) Representative: **Maiwald GmbH**
**Elisenhof**
**Elisenstraße 3**
**80335 München (DE)**

(54) **TITANIUM PHOSPHATE POWDER AND PRODUCTION METHOD THEREOF**

(57)   A titanium phosphate powder containing plate-like particles with a reduced content ratio of byproducts other than the plate-like particles, and exhibiting crystallinity of titanium phosphate represented by a chemical formula $Ti(HPO_4)_2 \cdot nH_2O$ ($0 \leq n \leq 1$) is provided in the present disclosure. The present disclosure relates to a method for producing a titanium phosphate powder exhibiting crystallinity of titanium phosphate represented by a chemical formula $Ti(HPO_4)_2 \cdot nH_2O$ ($0 \leq n \leq 1$), and containing plate-like particles, the method comprising putting an acidic raw material aqueous solution containing phosphorus and titanium in a sealed vessel, and storing the sealed vessel containing the raw material aqueous solution for a period of 2 hours or more, with the ambient temperature of the sealed vessel maintained under a constant temperature condition within a range of 40°C or more and less than 100°C, wherein during the storage, the raw material aqueous solution is not stirred, or during the storage, the raw material aqueous solution is stirred, and in the case where the raw material aqueous solution is stirred during the storage, a swirl flow rate in stirring the raw material aqueous solution is within a range of more than 0 m/s and 0.30 m/s or less.

[FIG. 3]

15.0kV 7.4mm x5.00k SE(U)     10.0um

EP 4 299 512 A1

**Description**

**BACKGROUND OF THE INVENTION**

**Field of the Invention**

The present invention relates to a titanium phosphate powder and a production method thereof.

**Description of the Related Art**

It is known that titanium phosphate may be composed of crystalline particles represented by a chemical formula $Ti(HPO_4)_2 \cdot nH_2O$ (n: integer) . In Japanese Examined Patent Publication (Kokoku) No. 49-1720, International Publication No. WO2018/180797 (corresponding to U.S. Patent Application Publication No. 2020/0377369), and Japanese Patent Application Laid-Open No. 2000-7311, methods for producing titanium phosphate are disclosed. In particular, Japanese Examined Patent Publication (Kokoku) No. 49-1720 and International Publication No. WO2018/180797 (corresponding to U.S. Patent Application Publication No. 2020/0377369) disclose obtaining plate-like particles of titanium phosphate through a reaction of raw materials containing titanium and phosphorus (a reaction of raw materials containing a titanium-containing raw material and a phosphorous containing raw material) are disclosed.

In Japanese Examined Patent Publication (Kokoku) No. 49-1720, a method for producing titanium phosphate powder including mixing an aqueous solution of a titanium source material and orthophosphoric acid or an aqueous solution thereof at a specified ratio, mixing titanium dioxide and an orthophosphoric acid aqueous solution at a specified ratio, or mixing a titanium source material and an orthophosphoric acid aqueous solution at a specified ratio, reacting the resulting mixture at a specified temperature in a sealed vessel to produce a hexagonal plate-like titanium phosphate crystals, and separating a crystalline titanium phosphate for collection is disclosed.

In International Publication No. WO2018/180797 (corresponding to U.S. Patent Application Publication No. 2020/0377369), a titanium phosphate powder composed of plate-like crystalline particles of titanium phosphate having a specified average thickness of plate-like crystalline particles and a specified aspect ratio, and a method for producing titanium phosphate powder composed of plate-like crystalline particles of titanium phosphate including reacting a mixture of titanium sulfate and phosphoric acid by a hydrothermal synthesis are disclosed.

In Japanese Patent Application Laid-Open No. 2000-7311, a twin crystal particle of bis(hydrogenphosphate)titanium represented by a chemical formula $Ti(HPO_4)_2 \cdot nH_2O$ $(0 \leq n \leq 1)$, having a specified shape of at least two discs or semi-discs penetrating each other and a specified size, and a production method thereof are disclosed.

**SUMMARY OF THE INVENTION**

Although plate-like particles of titanium phosphate may be formed by the methods for producing titanium phosphate powder according to Japanese Examined Patent Publication (Kokoku) No. 49-1720 and International Publication No. WO2018/180797 (corresponding to U.S. Patent Application Publication No. 2020/0377369), it is desired to reduce formation of byproducts other than the plate-like particles.

Accordingly, an object of the present invention is to provide a titanium phosphate powder containing plate-like particles with a reduced content ratio of byproducts other than the plate-like particles, and exhibiting crystallinity of titanium phosphate represented by a chemical formula $Ti (HPO_4)_2 \cdot nH_2O$ $(0 \leq n \leq 1)$.

The object of the present invention can be achieved by the following means.

An aspect of the present invention relates to a method for producing a titanium phosphate powder exhibiting crystallinity of titanium phosphate represented by a chemical formula $Ti (HPO_4)_2 \cdot nH_2O$ $(0 \leq n \leq 1)$, and containing plate-like particles, the method including:

> putting an acidic raw material aqueous solution containing phosphorus and titanium in a sealed vessel, and
> storing the sealed vessel containing the raw material aqueous solution for a period of 2 hours or more, with the ambient temperature of the sealed vessel maintained under a constant temperature condition within a range of 40°C or more and less than 100°C,
> wherein during the storage, the raw material aqueous solution is not stirred, or during the storage, the raw material aqueous solution is stirred, and
> in the case where the raw material aqueous solution is stirred during the storage, a swirl flow rate in stirring the raw material aqueous solution is within a range of more than 0 m/s and 0.30 m/s or less.

Another aspect of the present invention relates to a titanium phosphate powder exhibiting crystallinity of titanium phosphate represented by a chemical formula $Ti (HPO_4)_2 \cdot nH_2O$ $(0 \leq n \leq 1)$, and containing plate-like particles,

wherein a ratio of the number of particles having a shape other than the plate-like shape is 20% or less relative to the total number of particles.

## BRIEF DESCRIPTION OF THE DRAWINGS

FIG. 1 is a graph showing XRD measurement results of a powder 1 of the present invention and XRD measurement results of a standard card: 01-079-7347.
FIG. 2 is a graph showing XRD measurement results of a powder 4 in Comparative Example and XRD measurement results of a standard card: 01-079-7347.
FIG. 3 is a photograph showing an SEM image of a powder 1 of the present invention.
FIG. 4 is a photograph showing an SEM image of a powder 4 of Comparative Example.

## DETAILED DESCRIPTION OF THE PREFERRED EMBODIMENT

Hereinafter, the embodiments of the present invention are described. However, the present invention is not limited to the following embodiments and may be modified in various manners within the scope of claims. Embodiments described in the present specification may be optionally combined into another embodiment.

In the present specification, unless otherwise specified, operations and measurements of physical properties or the like are performed under conditions at room temperature (in the range from 20°C or more and 25°C or less).

An aspect of the present invention relates to a method for producing a titanium phosphate powder exhibiting crystallinity of titanium phosphate represented by a chemical formula $Ti(HPO_4)_2 \cdot nH_2O$ ($0 \leq n \leq 1$), and containing plate-like particles, the method including:

putting an acidic raw material aqueous solution containing phosphorus and titanium in a sealed vessel, and
storing the sealed vessel containing the raw material aqueous solution for a period of 2 hours or more, with the ambient temperature of the sealed vessel maintained under a constant temperature condition within a range of 40°C or more and less than 100°C,
wherein during the storage, the raw material aqueous solution is not stirred, or during the storage, the raw material aqueous solution is stirred, and
in the case where the raw material aqueous solution is stirred during the storage, a swirl flow rate in stirring the raw material aqueous solution is within a range of more than 0 m/s and 0.30 m/s or less. According to the present aspect, a titanium phosphate powder containing plate-like particles with a reduced content ratio of byproducts other than the plate-like particles, and exhibiting crystallinity of titanium phosphate represented by a chemical formula $Ti(HPO_4)_2 \cdot nH_2O$ ($0 \leq n \leq 1$), may be provided.

A titanium phosphate powder is used for various applications. It is preferable that the shape of the titanium phosphate particles contained in the titanium phosphate powder be thin plate-like, from the viewpoint of good slidability between the particles. It is preferable that the shape of the titanium phosphate particles contained in the titanium phosphate powder be thin plate-like, from the viewpoints that in a coating film obtained by applying a slurry obtained by dispersing or suspending titanium phosphate powder in a solvent (for example, an ink containing titanium phosphate powder, a coating material containing titanium phosphate powder) and drying the solvent, the plane direction of the particles becomes parallel with a substrate to be coated and a uniform thickness tends to be easily obtained, and dispersibility is also high and aggregation is difficulty to occur (for example, dispersibility is also high and aggregation is difficulty to occur in the coating film).

The present inventors have found that in production of a titanium phosphate powder exhibiting crystallinity and containing plate-like particles, the degree of formation of byproducts other than the plate-like particles (in the present specification, referred to simply as "byproducts") relates to the heating temperature in heating the raw material aqueous solution in a sealed vessel. The present inventors have also found that the degree of formation of byproducts relates to the presence or absence of stirring of the raw material mixture in heating, and particularly relates to the swirl flow rate among various parameters of stirring. Regarding the heating temperature in heating the raw material aqueous solution in a sealed vessel, presence or absence of stirring, and the swirl flow rate in stirring the raw material aqueous solution, the present inventors have found conditions for producing a titanium phosphate powder exhibiting crystallinity and containing plate-like particles, with further reduced formation of byproducts, so that the present invention has been completed.

The present inventors presume a mechanism for solving the problem by the production method in the present aspect as follows.

Conventionally, in production of a titanium phosphate powder exhibiting crystallinity and containing plate-like particles, the heating temperature for heating a raw material mixture in a sealed vessel has been usually 100°C or more. For example, in the method for producing a titanium phosphate powder in Japanese Examined Patent Publication (Kokoku) No. 49-1720, the raw material mixture is heated at 100°C or more and 225°C or less, 150°C or more and 225°C or less, or 300°C or more and 400°C or less. Further, for example, regarding the method for producing titanium phosphate powder in in International Publication No. WO2018/180797 (corresponding to U.S. Patent Application Publication No. 2020/0377369), in International Publication No. WO2018/180797 (corresponding to U.S. Patent Application Publication No. 2020/0377369), the reaction temperature in the hydrothermal synthesis is set to 100°C or more and 160°C or less. However, in the case where the heating temperature is set to a high temperature such as 100°C or more, it is difficult to heat a raw material mixture uniformly, so that variation in the reaction temperature in the whole raw material mixture increases. Such heating at high temperature causes formation of byproducts. Further, in order to reduce the variation in the reaction temperature in the whole raw material mixture, the raw material mixture in heating is usually stirred at a specific rate or more. Such stirring results in increase in collision frequency between particles, causing formation of byproducts.

On the other hand, in the production method of the present aspect, when the raw material aqueous solution is heated in a sealed vessel, the ambient temperature of the sealed vessel is maintained under a constant temperature condition within a range of 40°C or more and less than 100°C. It is presumed that although the temperature is lower than the conventional heating temperature, the plate-like crystalline particles of titanium phosphate represented by a chemical formula $Ti(HPO_4)_2 \cdot nH_2O$ ($0 \leq n \leq 1$) may be formed at the temperature. The temperature allows the raw material aqueous solution to be uniformly heated more easily, so that the formation of byproducts may be reduced. Also, in the production method of the present embodiment, the raw material aqueous solution is not stirred during heating, or even in the case where the raw material aqueous solution is stirred during heating, a swirl flow rate is equal to or less than a specific value. With a swirl flow rate in the range equal to or less than a specific value, the collision frequency between particles is further reduced, so that the formation of byproducts may be reduced. Accordingly, the production method of the present aspect allows the formation of byproducts to be further reduced in a method for producing a titanium phosphate powder exhibiting crystallinity of titanium phosphate represented by a chemical formula $Ti(HPO_4)_2 \cdot nH_2O$ ($0 \leq n \leq 1$) and containing plate-like particles.

The mechanism is based on a presumption and the correctness or incorrectness thereof has no effect on the technical scope of the present invention. Also, regarding other presumptions in the present specification, the correctness or incorrectness thereof has no effect on the technical scope of the present invention in the same manner.

[Raw material aqueous solution]

The method for producing a titanium phosphate powder of the present aspect includes putting an acidic raw material aqueous solution containing phosphorus and titanium (hereinafter, also referred to simply as "raw material aqueous solution") in a sealed vessel.

The raw material aqueous solution contains phosphorus. The existing state of phosphorus in the raw material aqueous solution is not particularly limited, and examples thereof include an atom, a part or the whole of a molecule, and a part or the whole of an ion.

The concentration of phosphorus in the raw material aqueous solution is not particularly limited. The concentration of phosphorus in the raw material aqueous solution relative to the total mass of the raw material aqueous solution is preferably 1 mass% or more, more preferably 5 mass% or more, and still more preferably 9 mass% or more. In these ranges, the particle size of plate-like particles in the titanium phosphate powder may be further reduced. The concentration of phosphorus in the raw material aqueous solution relative to the total mass of the raw material aqueous solution is preferably 30 mass% or less, more preferably 20 mass% or less, and still more preferably less than 15 mass%. In these ranges, the particle size of plate-like particles in the titanium phosphate powder may be further increased. Examples of the preferred range of the concentration of phosphorus in the raw material aqueous solution relative to the total mass of the raw material aqueous solution include 1 mass% or more and 30 mass% or less, 5 mass% or more and 20 mass% or less, and 9 mass% or more and less than 15 mass%. The concentration of phosphorus in the raw material aqueous solution, however, is not limited thereto.

The concentration of phosphorus in the raw material aqueous solution may be calculated from the mass of the raw material aqueous solution, the mass of a phosphorus-containing material as raw material, the molecular weight of the phosphorus-containing material, and the atomic weight of phosphorus. For example, in the case of using only one type of phosphorus-containing material having one phosphorus element in one molecule, the concentration of phosphorus in the raw material aqueous solution may be calculated by a calculation:

"Phosphorus concentration in raw material aqueous solution" (unit: mass%)=("Mass of phosphorus-containing material"/"Molecular weight of phosphorus-containing material" x "Atomic weight of phosphorus")/"Mass of raw material aqueous solution" x 100

For example, in the case of using only one type of phosphorus-containing material having n phosphorus atoms in a molecule, the concentration of phosphorus in the raw material aqueous solution may be calculated by a calculation:

"Phosphorus concentration in raw material aqueous solution" (unit: mass%)=("Mass of phosphorus-containing material"/"Molecular weight of phosphorus-containing material" x "Atomic weight of phosphorus" x n)/"Mass of raw material aqueous solution" x 100

In the case where the amount of the phosphorus-containing material added (mass) is known as the amount (mass) in terms of a specific phosphorus-containing material, the concentration of phosphorus in the raw material aqueous solution may be calculated from the mass of the raw material aqueous solution, the amount (mass) in terms of the specific phosphorus-containing material, the molecular weight of the specific phosphorus-containing material, and the atomic weight of phosphorus.

The raw material aqueous solution contains titanium. The existing state of titanium in the raw material aqueous solution is not particularly limited, and examples thereof include an atom, a part or the whole of a molecule, and a part or the whole of an ion. It is preferable that titanium ions be contained in the raw material aqueous solution.

The concentration of titanium in the raw material aqueous solution is not particularly limited. The concentration of titanium in the raw material aqueous solution relative to the total mass of the raw material aqueous solution is preferably 0.1 mass% or more, more preferably 0.5 mass% or more, and still more preferably 1 mass% or more. In these ranges, the yield of the titanium phosphate powder is improved. The concentration of titanium in the raw material aqueous solution relative to the total mass of the raw material aqueous solution is preferably 5 mass% or less, more preferably 3 mass% or less, and still more preferably 2 mass% or less. In these ranges, gelation of the titanium phosphate powder may be further suppressed and the particle size of the plate-like particles in the titanium phosphate powder is more easily controlled. Examples of the preferred range of the concentration of titanium in the raw material aqueous solution relative to the total mass of the raw material aqueous solution include 0.1 mass% or more and 5 mass% or less, 0.5 mass% or more and 3 mass% or less, and 1 mass% or more and 2 mass% or less. The concentration of titanium in the raw material aqueous solution, however, is not limited thereto.

The concentration of titanium in the raw material aqueous solution may be calculated from the mass of the raw material aqueous solution, the mass of a titanium-containing material as raw material, the molecular weight of the titanium-containing material, and the atomic weight of titanium. For example, in the case of using only one type of titanium-containing material having one titanium element in one molecule, the concentration of titanium in the raw material aqueous solution may be calculated by a calculation:

"Titanium concentration in raw material aqueous solution" (unit: mass%)=("Mass of titanium-containing material"/"Molecular weight of titanium-containing material" x "Atomic weight of titanium")/"Mass of raw material aqueous solution" x 100

For example, in the case of using only one type of titanium-containing material having n titanium atoms in a molecule, the concentration of titanium in the raw material aqueous solution may be calculated by a calculation:

```
"Titanium concentration in raw material aqueous
solution" (unit: mass%)=("Mass of titanium-containing
material"/"Molecular weight of titanium-containing
material" x "Atomic weight of titanium" x n)/"Mass of
raw material aqueous solution" x 100
```

In the case where the amount of the titanium-containing material added (mass) is known as the amount (mass) in terms of a specific titanium-containing material (for example, titanium oxide such as titanium dioxide), the concentration of titanium in the raw material aqueous solution may be calculated from the mass of the raw material aqueous solution, the amount (mass) in terms of the specific titanium-containing material, the molecular weight of the specific titanium-containing material, and the atomic weight of titanium.

The raw material aqueous solution is acidic. In the present specification, the term "acidic" means that when a litmus paper (blue) manufactured by Advantec Toyo Kaisha, Ltd. comes in contact with the raw material aqueous solution, the litmus paper (blue) changes color into red.

The raw material aqueous solution is acidic and contains protons. The proton concentration in the raw material aqueous solution is not particularly limited. The proton concentration per 1 kg of the raw material aqueous solution is preferably 6 mol/kg or more, more preferably 7 mol/kg or more, and still more preferably 9 mol/kg or more. Within these ranges, the particle size of the plate-like particles in a titanium phosphate powder may be further reduced. The proton concentration per 1 kg of the raw material aqueous solution is preferably 14 mol/kg or less, more preferably 12 mol/kg or less, and still more preferably 10 mol/kg or less. Within these ranges, the particle size of the plate-like particles in a titanium phosphate powder may be further increased. Examples of the preferred range of the proton concentration per 1 kg of the raw material aqueous solution include 6 mol/kg or more and 14 mol/kg or less, 7 mol/kg or more and 12 mol/kg or less, and 9 mol/kg or more and 10 mol/kg or less. The proton concentration per 1 kg of the raw material aqueous solution in the raw material aqueous solution is, however, not limited thereto.

The proton concentration in the raw material aqueous solution may be calculated from the mass of an acidic material as the raw material (For example, an acid. Preferred examples include phosphoric acid, an acid containing no phosphorus and no titanium. The same applies hereinafter.), the molar mass of the acidic material, the valence of the acidic material, and the mass of the raw material.

For example, in the case where the acidic material contained in the raw material aqueous solution is phosphoric acid and a phosphoric acid aqueous solution is used for preparation of the raw material aqueous solution, the proton concentration in the raw material aqueous solution may be calculated by a calculation:

```
"Proton concentration in raw material aqueous
solution (unit: mol/kg)"=("Concentration of phosphoric
acid aqueous solution (unit: mass%)" x "Mass of
phosphoric acid aqueous solution (unit: kg)" x
1000/"Molar mass of phosphoric acid (unit: g/mol)") x
Valence of phosphoric acid: 3 (unit: -)/"Mass of raw
material aqueous solution (unit: kg)"
```

Alternatively, for example, in the case where the acidic materials contained in the raw material aqueous solution are phosphoric acid and sulfuric acid, and the raw material aqueous solution is prepared from a phosphoric acid aqueous solution and an aqueous solution containing sulfuric acid and no phosphoric acid, the proton concentration in the raw material aqueous solution may be calculated as follows. The molar quantity of protons in the phosphoric acid aqueous solution is calculated from the mass of phosphoric acid in the phosphoric acid aqueous solution, the molar mass of phosphoric acid, and the valence of phosphoric acid. Further, the molar quantity of protons in the aqueous solution containing sulfuric acid and no phosphoric acid is calculated from the mass of sulfuric acid in the aqueous solution containing sulfuric acid and no phosphoric acid, the molar mass of sulfuric acid, and the valence of sulfuric acid. And the proton concentration in the raw material solution may be calculated from the total of molar mass of protons in these aqueous solutions and the mass of the raw material aqueous solution.

It is preferable that the method for producing a titanium phosphate powder further include preparing a raw material aqueous solution. The method for preparing the raw material aqueous solution is not particularly limited. A known method for obtaining a raw material aqueous solution may be employed without particular limitations on the method of mixing, the sequence of mixing and the conditions of mixing. In preparation for the raw material aqueous solution, each component contained in the raw material aqueous solution may be added directly or as a solution, an aqueous solution, a dispersion or the like. The solvent and/or dispersion medium of these liquids are not particularly limited and may be water or an organic solvent.

The method for producing a titanium phosphate powder further includes preparing a raw material aqueous solution, in which it is preferable that phosphorus be added as a phosphorus-containing material and titanium be added as a titanium-containing material. It is more preferable that preparation for the raw material aqueous solution include further adding an acid containing no phosphorus and no titanium.

As the method for preparing a raw material aqueous solution, a method including mixing a plurality of raw materials containing a phosphorus-containing material and a titanium-containing material is preferred, and a method including mixing a plurality of raw materials containing a phosphorus-containing material, a titanium-containing material, and an acid containing no phosphorus and no titanium is more preferred. It is preferable that the raw material aqueous solution be an acidic mixture aqueous solution containing a phosphorus-containing material and a titanium-containing material. It is more preferable that the mixture aqueous solution further contain an acid containing no phosphorus and no titanium.

In preparation of the raw material aqueous solution, it is preferable that phosphorus be added as a phosphorus-containing material. The phosphorus-containing material is not particularly limited, and examples thereof include phosphoric acid and a salt thereof. The type of the salt is not particularly limited, and examples thereof include a metal salt (for example, an alkali metal salt and a salt of group II elements), and an amine salt. One type of the salts may be used alone or two or more types may be used in combination. One type of the phosphorus-containing materials may be used alone or two or more types may be used in combination. The phosphorus-containing material preferably contains phosphoric acid, a phosphate or a combination thereof, and more preferably contains phosphoric acid. The total content of phosphoric acid and phosphates relative to the total mass of the phosphorus-containing materials (preferably, the content of phosphoric acid) (in the case of containing two or more types, total content) is preferably 50 mass% or more, more preferably 90 mass% or more, and still more preferably 100 mass% (upper limit: 100 mass%).

In the present specification, a compound containing phosphorus and titanium is treated as a phosphorus-containing material, not as a titanium-containing material.

In the preparation of a raw material aqueous solution, it is preferable that titanium be added as a titanium-containing material. The titanium-containing material is not particularly limited, and examples thereof include elemental titanium and a titanium-containing compound. As the titanium-containing material and the titanium-containing compound, a compound able to form titanium ions in the raw material aqueous solution is preferred. The titanium-containing material is not particularly limited, and examples thereof include titanium sulfide ($Ti(SO_4)_2$), titanyl sulfate ($TiOSO_4$), titanium hydroxide, and titanium oxide (for example, titanium dioxide). One of the titanium-containing materials may be used alone, or two or more types may be used in combination. The titanium-containing material preferably contains at least one compound selected from the group consisting of titanium sulfate, titanyl sulfate, titanium hydroxide and titanium oxide (for example, titanium dioxide), and more preferably contains at least one compound selected from the group consisting of titanium oxide (for example, titanium dioxide) and titanium sulfate. The content of these compounds (in the case of containing two or more types, the content in total) relative to the total mass of the titanium-containing materials is preferably 50 mass% or more, more preferably 90 mass% or more, and still more preferably 100 mass% (upper limit: 100 mass%).

In the preparation of the raw material aqueous solution, it is preferable that an acid containing no phosphorus and no titanium be further added. The acid containing no phosphorus and no titanium is not particularly limited, and examples thereof include a known organic acid and a known inorganic acid. Examples of the acid containing no phosphorus and no titanium include hydrochloric acid, sulfuric acid, nitric acid, carbonic acid, acetic acid, citric acid and formic acid. One type of acids containing no phosphorus and no titanium may be used alone, or two or more types may be used in combination. The acid containing no phosphorus and no titanium preferably includes at least one acid selected from the group consisting of hydrochloric acid, sulfuric acid, nitric acid, carbonic acid, acetic acid, citric acid and formic acid, and more preferably includes sulfuric acid. The content of these acids (preferably sulfuric acid) (in the case of containing two or more types, the content in total) relative to the total mass of the acids containing no phosphorus and no titanium is preferably 50 mass% or more, more preferably 90 mass% or more, and still more preferably 100 mass% (upper limit: 100 mass%).

It is preferable that the acid containing no phosphorus and no titanium be capable of facilitating dissolution of titanium-containing material and formation of titanium ions in the raw material aqueous solution.

A preferred example of the method for preparing a raw material aqueous solution include a method including mixing a phosphorus-containing material, an aqueous solution containing the same or a combination thereof with a titanium-containing material, an aqueous solution containing the same or a combination thereof. In the method for preparing a raw material aqueous solution, another component, an aqueous solution containing another component or a combination thereof may be further mixed on an as needed basis. Among a phosphorus-containing material, an aqueous solution containing the same and a combination thereof, use of an aqueous solution containing a phosphorus-containing material is preferred, and use of phosphoric acid aqueous solution is more preferred. Among a titanium-containing material, an aqueous solution containing the same and a combination thereof, use of an aqueous solution containing a titanium-containing material is preferred. It is preferable that the aqueous solution containing a titanium-containing material be acidic. It is preferable that the aqueous solution containing a titanium-containing material further contain an acid containing no phosphorus and no titanium. Examples of the acid containing no phosphorus and no titanium in an aqueous solution containing a titanium-containing material and preferred embodiments thereof are the same as the acids containing no phosphorus and no titanium described above. It is preferable that the aqueous solution containing a titanium-containing material further contain a sulfuric acid. A preferred example of the aqueous solution containing a titanium-containing material include an aqueous solution containing titanium sulfate. A more preferred example of the aqueous solution containing a titanium-containing material include an aqueous solution containing titanium sulfate and sulfuric acid.

In the case where an acid containing no phosphorus and no titanium is further added in the preparation of a raw material aqueous solution, a preferred example of the method for preparing the raw material aqueous solution includes a method including mixing a phosphorus-containing material, an aqueous solution containing the same, or a combination thereof; a titanium-containing material, an aqueous solution containing the same, or a combination thereof; and an acid containing no phosphorus and no titanium, an aqueous solution containing the same, or a combination thereof. In the method for preparing the raw material aqueous solution, another component, an aqueous solution containing another component, or a combination thereof may be further mixed on an as needed basis. Among a phosphorus-containing material, an aqueous solution containing the same, and a combination thereof, use of an aqueous solution containing a phosphorus-containing material is preferred, and use of a phosphoric acid aqueous solution is more preferred. Among a titanium-containing material, an aqueous solution containing the same, and a combination thereof, use of an aqueous solution containing a titanium-containing material is preferred. It is preferable that the aqueous solution containing a titanium-containing material be acidic. It is preferable that the aqueous solution containing a titanium-containing material further contain an acid containing no phosphorus and no titanium. Examples the acid containing no phosphorus and no titanium and preferred embodiments thereof in the aqueous solution containing a titanium-containing material are the same as the acids containing no phosphorus and no titanium described above. It is particularly preferable that the aqueous solution containing a titanium-containing material further contain a sulfuric acid. The aqueous solution containing a titanium-containing material is more preferably an aqueous solution containing titanium sulfate, and still more preferably an aqueous solution containing titanium sulfate and sulfuric acid. Among an acid containing no phosphorus and no titanium, an aqueous solution containing the same, and a combination thereof, use of an aqueous solution containing an acid containing no phosphorus and no titanium is preferred, and use of sulfuric acid aqueous solution is more preferred.

In an aqueous solution containing a titanium-containing material, it is preferable that a part or the whole of titanium be in an ionic state of titanium. In other words, it is preferable that the aqueous solution containing a titanium-containing material (preferably, an acidic aqueous solution containing a titanium-containing material) contain titanium ions. A raw material aqueous solution is thus prepared with titanium ions in a more stable state, so that the resulting titanium phosphate tends to have more uniform grain size.

As the method for preparing the raw material aqueous solution, a method including mixing a titanium-containing material, an aqueous solution containing the same, or a combination thereof; an acid containing no phosphorus and no titanium, an aqueous solution containing the same, or a combination thereof; and if necessary, water, to obtain an acidic aqueous solution containing a titanium-containing material, and then mixing a phosphorus-containing material, an aqueous solution containing the same, or a combination thereof with the resulting acidic aqueous solution containing a titanium-containing material is preferred. In the method for preparing the raw material aqueous solution, another component, an aqueous solution containing another component, or a combination thereof may be further mixed on an as needed basis.

Each of the methods for preparing the aqueous solution containing a phosphorus-containing material, the aqueous solution containing titanium-containing material, and the aqueous solution containing an acid containing no phosphorus and no titanium is not particularly limited, as long as the target aqueous solution can be obtained by the method. In the preparation, the method of mixing, the sequence of mixing, and the conditions for mixing and the like are also not particularly limited. As the preparation method, for example, a known method may be employed.

The concentration of a phosphorus-containing material (preferably, phosphoric acid) (in the case of containing two or more types, the concentration in total) in the aqueous solution containing a phosphorus-containing material is not particularly limited, and preferably 50 mass% or more and less than 100 mass% relative to the total mass of the aqueous solution containing a phosphorus-containing material. The concentration of a titanium-containing material (in the case of containing two or more types, the concentration in total) in the aqueous solution containing a titanium-containing material is not particularly limited, and preferably 3 mass% or more and less than 15 mass% relative to the total mass of the aqueous solution containing a titanium-containing material. The concentration of an acid containing no phosphorus and no titanium (preferably, sulfuric acid) (in the case of containing two or more types, the concentration in total) in the aqueous solution containing an acid containing no phosphorus and no titanium is not particularly limited, and preferably 80 mass% or more (80 mass% or more and less than 100 mass%) relative to the total mass of the aqueous solution containing an acid containing no phosphorus and no titanium.

A preferred example of the raw material aqueous solution includes a raw material aqueous solution containing phosphorus, titanium and protons, with a proton concentration in the preferred range described above in the raw material aqueous solution. Another preferred example of the raw material aqueous solution includes a raw material aqueous solution containing the phosphorus-containing material described above, the titanium-containing material described above, and the acid containing no phosphorus and no titanium and described above, with a proton concentration in the preferred range described above in the raw material aqueous solution.

[Storage method]

The method for producing a titanium phosphate powder of the present aspect includes storing a sealed vessel containing a raw material aqueous solution for a period of 2 hours or more, with the ambient temperature of the sealed vessel maintained under a constant temperature condition within a range of 40°C or more and less than 100°C. In the present specification, "storing a sealed vessel containing a raw material aqueous solution for a period of 2 hours or more, with the ambient temperature of the sealed vessel maintained under a constant temperature condition within a range of 40°C or more and less than 100°C" may be also referred to as "storing under a constant temperature condition". During the storage under a constant temperature condition, the raw material aqueous solution is not stirred, or in the case where the raw material aqueous solution is stirred during storge under a constant temperature condition, a swirl flow rate in stirring the raw material aqueous solution is within a range of more than 0 m/s and 0.30 m/s or less.

Titanium phosphate may be produced by reacting raw materials containing titanium and phosphorus (for example, raw materials containing a titanium-containing raw material and a phosphorous containing raw material) through hydrothermal synthesis. A titanium phosphate powder exhibiting crystallinity of titanium phosphate represented by a chemical formula $Ti(HPO_4)_2 \cdot nH_2O$ ($0 \leq n \leq 1$) and containing plate-like particles is produced by storing a sealed vessel under the condition described above, in which a reaction of the raw material aqueous solution as raw material proceed.

The sealed vessel is a sealable vessel, which is not particularly limited as long as the decrease in the filling material to fill the vessel can be sufficiently suppressed for the production of a target titanium phosphate powder. Examples of the sealed vessel include a class-1 pressure vessel, a small-size pressure vessel, and another vessels sealable with a lid, a plug or the like, though not limited thereto. Specific examples include an SUS vessel coated with PFA (perfluoroalkoxyalkane) with PTFE (polytetrafluoroethylene) packing, an I-Boy manufactured by AS ONE Corporation, a PTFE (polytetrafluoroethylene) pressure vessel, an SUS (stainless steel) autoclave coated with PFA (perfluoroalkoxyalkane) with stirring blades, and a glass lined autoclave, though not limited thereto.

As the sealed vessel, a sealed vessel having stirring blades and a heater is preferred, and a pressure vessel having stirring blades and a heater (for example, a class-1 pressure vessel, a small-size pressure vessel) is particularly preferred.

In the method for producing a titanium phosphate powder of the present aspect, the temperature in storage is lower, in comparison with the conventional production method which requires a storage temperature of 100°C or more. Accordingly, a sealed vessel having lower pressure resistance may be used in comparison with a sealed vessel usually used in the conventional production method.

In the method for producing a titanium phosphate powder of the present aspect, in storing the sealed vessel containing the raw material aqueous solution with the ambient temperature of the sealed vessel maintained within a range of 40°C or more and less than 100°C, the ambient temperature of the sealed vessel is maintained under a constant temperature condition for a period of 2 hours or more. In the present specification, "constant temperature condition" means that the temperature change relative to a reference temperature (in the present aspect, a reference ambient temperature of the sealed vessel) is ±3°C or less (in other words, "constant temperature condition" means that the temperature change relative to a reference temperature is within ±3°C (-3°C or more and +3°C or less)). In the method for producing a titanium phosphate powder of the present aspect, the period for storing the sealed vessel in storage under the constant temperature condition (storage period) may be determined from the longest period in which the constant temperature condition continues within the range of 40°C or more and less than 100°C, for the selection of the temperature as reference of the constant temperature condition (reference temperature) from the measured ambient temperature of the sealed vessel. For example, for the selection of an ambient temperature of the sealed vessel of 90°C as reference temperature, the storage period may be determined as follows. For the selection of an ambient temperature of the sealed vessel of 90°C as reference temperature, when the period in which the constant temperature condition for the ambient temperature of the sealed vessel continues within the range of 40°C or more and less than 100°C is the longest, the period in which the constant temperature condition for the ambient temperature of the sealed vessel continues with 90°C of the ambient temperature of the sealed vessel selected as the reference temperature is determined as the storage period. Incidentally, also for the selection of another ambient temperature of the sealed vessel as reference temperature, the storage period may be determined in the same manner except that the reference temperature is different.

The fulfillment of the ambient temperature of the sealed vessel to the constant temperature condition and the period for storing the sealed vessel under the constant temperature condition (storage period) may be determined from the ambient temperature of the sealed vessel obtained from the measurement of the ambient temperature of the sealed vessel at intervals of 1 minute or less.

The ambient temperature of the sealed vessel may be measured, for example, at intervals of 1 minute. In the method for producing a titanium phosphate powder according to a preferred embodiment of the present invention, the storage of the sealed vessel satisfies conditions under a constant temperature, in the case where the ambient temperature of the sealed vessel is measured at intervals of 1 minute. The ambient temperature of the sealed vessel may be measured, for example, at intervals of less than 1 minute. In the method for producing a titanium phosphate powder according to a preferred embodiment of the present invention, the storage of the sealed vessel satisfies conditions under a constant temperature, in the case where the ambient temperature of the sealed vessel is measured at intervals of less than 1 minute.

The ambient temperature of the sealed vessel in storage under a constant temperature condition (storage temperature) is 40°C or more and less than 100°C. In the present specification, "storage temperature is 40°C or more and less than 100°C" means that under a constant temperature condition, even when the ambient temperature of the sealed vessel changes within a range of ±3°C or less (in other words, under a constant temperature condition, even when the ambient temperature of the sealed vessel changes within ±3°C), the ambient temperature of the sealed vessel is within a range of 40°C or more and less than 100°C in storage under a constant temperature condition. The storage temperature is not particularly limited as long as the temperature is 40°C or more and less than 100°C. With a storage temperature of less than 40°C, plate-like particles of titanium phosphate are not sufficiently formed. The storage temperature may be 55°C or more, 65°C or more, 75°C or more, or 85°C or more. With a storage temperature of more than 100°C, the abundance ratio of byproducts remarkably increases. The storage temperature is preferably 95°C or less, and more preferably 93°C or less. The storage temperature may be less than 85°C, less than 75°C, less than 65°C, or less than 55°C. In these ranges, formation of byproducts may be further reduced. Preferred examples of the storage temperature include 40°C or more and 95°C or less, 40°C or more and 93°C or less, 40°C or more and less than 85°C, 40°C or more and less than 75°C, 40°C or more and less than 65°C, 40°C or more and less than 55°C, 55°C or more and less than 100°C, 55°C or more and 95°C or less, 55°C or more and 93°C or less, 65°C or more and less than 100°C, 65°C or more and 95°C or less, 65°C or more and 93°C or less, 75°C or more and less than 100°C, 75°C or more and 95°C or less, 75°C or more and 93°C or less, 85°C or more and less than 100°C, 85°C or more and 95°C or less, and 85°C or more and 93°C or less, though not limited thereto. In the present specification, the storage temperature within each of the ranges means that even in the case where the ambient temperature of the sealed vessel changes within a range of ±3°C or less under a constant temperature condition (in other words, even in the case where the ambient temperature of the sealed vessel changes within ±3°C under a constant temperature condition), the ambient temperature of the sealed vessel is in each of the ranges in storge under a constant temperature condition.

The heating method is not particularly limited, and examples thereof include a method of disposing a sealed vessel in a thermostat chamber and a method of heating a sealed vessel with a heater attached to the sealed vessel.

In the case where a sealed vessel is disposed in a thermostat chamber, the ambient temperature of the sealed vessel means the ambient temperature in the thermostat chamber. In the case where a sealed vessel is disposed in a thermostat chamber, the ambient temperature of the sealed vessel may be, for example, the temperature measured by a thermocouple disposed in the thermostat chamber.

In the case where a sealed vessel is heated with a heater attached to the sealed vessel, the ambient temperature of the sealed vessel means the temperature in the vicinity outside of the heater. In the case where the heater is electrothermally heated, the ambient temperature of the sealed vessel may be, for example, the temperature measured by a thermocouple disposed in the vicinity outside of the heater. In the case where heater is heated using a liquid heating medium (for example, a chiller using hot water or oil, hot-water bath, and oil bath), the ambient temperature of the sealed vessel may be, for example, the temperature of the heating medium measured by a thermometer.

The period for storing the sealed vessel in storage under a constant temperature condition (storage period) is not particularly limited, as long as the period is 2 hours or more. With a storage period of less than 2 hours, the plate-like particles of titanium phosphate are insufficiently formed. The storage period is preferably 3 hours or more, and more preferably 5 hours or more. With a storage period in the ranges, the plate-like particles of titanium phosphate are more easily produced. The storage period is preferably 400 hours or less, preferably 350 hours or less, more preferably 200 hours or less, and particularly preferably 150 hours or less. With a storage period in the ranges, the productivity is further enhanced. Preferred examples of the storage period include 2 hours or more and 400 hours or less, 3 hours or more and 350 hours or less, 5 hours or more and 200 hours or less, and 20 hours or more and 150 hours or less, though the storage period is not limited thereto.

Incidentally, the ambient temperature of the sealed vessel before the sealed vessel is stored for a period of 2 hours or more while maintaining a constant temperature condition with the ambient temperature of the sealed vessel within a range of 40°C or more and less than 100°C is preferably less than 40°C.

During storage under a constant temperature condition, it is preferable that the raw material aqueous solution be not stirred. Alternatively, in the case where the raw material aqueous solution is stirred during storage under a constant temperature condition, it is preferable that stirring be performed with rotation of stirring blades. The material, the shape, and the number of the stirring blades are not particularly limited, and known stirring blades may be used. Examples of the shape of stirring blades include a propeller, an inclined paddle, a pfaudler, a straight paddle, a disc turbine, an anchor, a gate, a paddle, Maxblend, Fullzone, a double helical ribbon, a screw (with draft tube), and horizontal twin axes, though not limited thereto. Among them, Fullzone-shaped stirring blades (Fullzone blades) are more preferred.

In the case where the raw material aqueous solution is stirred during storge under a constant temperature condition, it is preferable that the swirl flow rate (the swirl flow rate in stirring the raw material aqueous solution) be more than 0 m/s and 0.3 m/s or less. With a swirl flow rate of more than 0.3 m/s, the abundance ratio of byproducts remarkably increases. The swirl flow rate is not particularly limited as long as the rate is 0.3 m/s or less, being preferably 0.26 m/s or less, more preferably 0.2 m/s or less, and still more preferably 0.1 m/s or less. With a swirl flow rate in these ranges, formation of byproducts may be further reduced. In the case where the raw material aqueous solution is stirred during storge, preferred examples of the swirl flow rate (the swirl flow rate in stirring the raw material aqueous solution) include more than 0 m/s and 0.26 m/s or less, more than 0 m/s and 0.2 m or less, and more than 0 m/s and 0.1 m/s or less, though the swirl flow rate is not limited thereto. In particular, it is preferable that the raw material aqueous solution be not stirred during storage.

The swirl flow rate is a stirring parameter described in "Stirring Technology" (edited by Satake Chemical Equipment MFG., Ltd., Publisher: Satake Chemical Equipment MFG., Ltd., published in 1992), which is a stirring parameter expressing the rotational angular velocity (circumferential velocity) of the tip of a stirring blade.

The swirl flow rate may be calculated in more detail as follows.

First, stirring Reynolds number Re (dimensionless number) is calculated from the following formula.

[Formula 1]

$$Re = nd^2\rho/\mu \qquad (I)$$

n: Number of rotations of stirring blade (unit: $s^{-1}$)
d: Blade diameter of stirring blade (unit: m)
$\rho$: Liquid viscosity (unit: $kg/m^3$)
$\mu$: Liquid viscosity (unit: Pa·s)

Next, fixed rotation radius rc (unit: m) is calculated from the following formula.

[Formula 2]

$$rc = 1.23[0.57 + 0.35(d/D)] \times (b/D)^{0.036}(nb)^{0.116} \times Re/(10^3 + 1.43Re) \qquad (II)$$

b: Blade width of stirring blade (unit: m)
D: Inner diameter of stirring tank (sealed vessel) (unit: m)
d: Blade diameter of stirring blade (unit: m)
n: Number of rotations of stirring blade (unit: $s^{-1}$)
Re: Stirring Reynolds number (unit: dimensionless number)

The swirl flow rate ut (unit: m/s) is calculated from the following formulas. The swirl flow rate ut (unit: m/s) is calculated from the following formula (III) when r≤rc, and calculated from the following formula (IV) when rc≤r.

[Formula 3]

$$ut = 2 \times \pi \times n \times r \qquad (III)$$

$$ut = 2 \times \pi \times n \times rc \times (rc/r)^{0.8} \qquad (IV)$$

r: Distance from center of stirring tank [blade radius of stirring blade] (unit: m)
rc: Fixed rotation radius (unit: m)
n: Number of rotations of stirring blade (unit: $s^{-1}$)

In the method for producing a titanium phosphate powder of the present aspect, during storage under a constant temperature condition, the raw material aqueous solution is not stirred, or even in the case where the raw material aqueous solution is stirred during heating, a swirl flow rate is equal to or less than a specific value, so that the method may be favorably applied to the production of a titanium phosphate powder containing plate-like particles at a higher concentration in comparison with a production method requiring strong stirring.

Through the storage under a constant temperature condition, a titanium phosphate powder exhibiting crystallinity of titanium phosphate represented by a chemical formula $Ti(HPO_4)_2 \cdot nH_2O$ ($0 \le n \le 1$) and containing plate-like particles is synthesized.

[Other steps]

The method for producing a titanium phosphate powder of the present aspect includes putting a raw material aqueous solution in a sealed vessel and storing the sealed vessel containing the raw material aqueous solution under a constant temperature condition. As described above, it is preferable that the method for producing a titanium phosphate powder further include preparing a raw material aqueous solution. The method for producing a titanium phosphate powder may further include steps other than these steps.

In the method for producing a titanium phosphate powder of the present aspect, it is preferable that the titanium phosphate powder be produced through washing a composite aqueous solution (aqueous solution containing titanium phosphate powder) obtained through the storage under a constant temperature condition, as described above with pure water until the electrical conductivity of the liquid reaches a certain level or less, drying and crushing the resulting product. The electrical conductivity of the composite aqueous solution as criterion for finishing the washing is not particularly limited, preferably 0.5 mS/cm or less, more preferably 0.2 mS/cm or less, and still more preferably 0.1 mS/cm or less. The electrical conductivity of the composite aqueous solution may be measured with a table-top type electrical conductivity meter DS-71 manufactured by HORIBA Advanced Techno, Co., Ltd.

[Titanium phosphate powder]

The resulting powder may be checked to be a titanium phosphate powder exhibiting crystallinity of titanium phosphate represented by a chemical formula $Ti(HPO_4)_2 \cdot nH_2O$ ($0 \le n \le 1$) by powder X-ray diffraction, and the detail of the measurement method is described in Examples.

The resulting powder may be checked to contain plate-like particles through observation using a scanning electron microscope (SEM), and the detail of the measurement method is described in Examples.

For a titanium phosphate powder produced by the production method of the titanium phosphate powder, the smaller ratio of the number of particles having a shape other than the plate-like shape relative to the total number of particles is more preferred, and a ratio of the number of particles having a shape other than the plate-like shape relative to the total number of particles is preferably 20% or less. Examples of the particles having a shape other than the plate-like shape include "composite crystal particles". In the present specification, "composite crystal particles" means particles having a structure in which at least two plate-like shapes are bonded or integrated. Incidentally, the twin crystal particles obtained by the production method described in Japanese Patent Application Laid-Open No. 2000-7311 are one type of the composite crystal particles. Accordingly, it can be said that another aspect of the present invention relates to a titanium phosphate powder exhibiting crystallinity of titanium phosphate represented by a chemical formula $Ti(HPO_4)_2 \cdot nH_2O$ ($0 \le n \le 1$) and containing plate-like particles, wherein a ratio of the number of particles having a shape other than the plate-like shape is 20% or less relative to the total number of particles. In a titanium phosphate powder, the ratio of the number of particles having a shape other than the plate-like shape relative to the total number of particles is more preferably 15% or less, still more preferably 10% or less, furthermore preferably 5% or less, particularly preferably 2% or less, and most preferably 0% (lower limit: 0%).

In the method for producing a titanium phosphate powder, formation of byproducts is suppressed, so that a powder having a higher content ratio of plate-like particles may be produced.

In a titanium phosphate powder, the higher ratio of the number of plate-like particles relative to the total number of particles is more preferred, and a ratio of the number of plate-like particles relative to the total number of particles is preferably 80% or more, more preferably 90% or more, still more preferably 95% or more, particularly preferably 98% or more, and most preferably 100% (upper limit: 100%). A titanium phosphate powder has preferably a ratio of the number of plate-like particles of 80% or more and 100% or less and a ratio of the number of particles having a shape other than the plate-like shape of 0% or more and 20% or less relative to the total number of particles, more preferably a ratio of the number of plate-like particles of 90% or more and 100% or less and a ratio of the number of particles having a shape other than the plate-like shape of 0% or more and 10% or less relative to the total number of particles, still more preferably a ratio of the number of plate-like particles of 95% or more and 100% or less and a ratio of the number of particles having a shape other than the plate-like shape of 0% or more and 5% or less relative to the total number of particles, particularly preferably a ratio of the number of plate-like particles of 98% or more and 100% or less and a ratio of the number of particles having a shape other than the plate-like shape of 0% or more and 2% or less relative to the total number of particles, and most preferably a ratio of the number of plate-like particles of 100% and a ratio of the number of particles having a shape other than the plate-like shape of 0% relative to the total number of particles.

In a titanium phosphate powder, the ratio of the number of particles having a shape other than the plate-like shape relative to the total number of particles may be determined by observation with a scanning electron microscope (SEM) to check the shapes of whole particles in an SEM image and calculate the ratio (%) of the number of particles having a shape other than the plate-like shape in the SEM image relative to the total number of particles in the SEM image (=Number of particles having a shape other than the plate-like shape in SEM image/Total number of particles in SEM image x 100). The detail of the measurement method is described in Examples.

In a titanium phosphate powder, the ratio of the number of plate-like particles relative to the total number of particles may be determined by observation with a scanning electron microscope (SEM) to check the shapes of whole particles in an SEM image and calculate the ratio (%) of the number of plate-like particles in the SEM image relative to the total number of particles in the SEM image (=Number of plate-like particles in SEM image/Total number of particles in SEM image x 100). In a titanium phosphate powder, the ratio(%) of the number of plate-like particles relative to the total number of particles may be determined from calculation of "100(0)-Ratio (%)of the number of particles having a shape other than the plate-like shape in SEM image relative to the total number of particles in SEM image".

The primary particle size (D50) of plate-like particles contained in a titanium phosphate powder is not particularly limited. The primary particle size (D50) of plate-like particles contained in a titanium phosphate powder is preferably 0.01 $\mu$m or more, more preferably 0.1 $\mu$m or more, still more preferably 0.2 $\mu$m or more, and particularly preferably 0.3 $\mu$m or more. The primary particle size (D50) of plate-like particles contained in a titanium phosphate powder is preferably 100 $\mu$m or less, more preferably 50 $\mu$m or less, still more preferably 20 $\mu$m or less, and particularly preferably 5 $\mu$m or less. In a preferred embodiment of the present invention, examples of the primary particle size (D50) of plate-like particles contained in a titanium phosphate powder include 0.01 $\mu$m or more and 100 $\mu$m or less, 0.1 $\mu$m or more and 50 $\mu$m or less, 0.2 $\mu$m or more and 20 $\mu$m or less, and 0.3 $\mu$m or more and 5 $\mu$m or less, though the primary particle size of plate-like particles contained in a titanium phosphate powder is not limited thereto.

The thickness (D50) of plate-like particles contained in a titanium phosphate powder is not particularly limited. The thickness (D50) of plate-like particles contained in a titanium phosphate powder is preferably 0.002 $\mu$m or more, more preferably 0.02 $\mu$m or more, still more preferably 0.05 $\mu$m or more, and particularly preferably 0.06 $\mu$m or more. The thickness (D50) of plate-like particles contained in a titanium phosphate powder is preferably 20 $\mu$m or less, more preferably 10 $\mu$m or less, still more preferably 4 $\mu$m or less, and particularly preferably 1 $\mu$m or less. In a preferred embodiment of the present invention, examples of the thickness (D50) of plate-like particles contained in a titanium phosphate powder include 0.002 $\mu$m or more and 20 $\mu$m or less, 0.02 $\mu$m or more and 10 $\mu$m or less, 0.05 $\mu$m or more and 4 $\mu$m or less, and 0.06 $\mu$m or more and 1 $\mu$m or less, though the thickness of plate-like particles contained in a titanium phosphate powder is not limited thereto.

The primary particle size (D50) of plate-like particles contained in a titanium phosphate powder and the primary particle size (D50) of plate-like particles contained in a titanium phosphate powder are determined respectively by photographing several times with a scanning electron microscope (SEM) with a magnification for photographing 50 or more and 100 or less particles at randomly different positions, and performing image analysis of the resulting SEM images using an image analysis software "Mac-View ver. 4" manufactured by Mountech Co., Ltd. Through measurement of 100 or more and 200 or less plate-like particles, the longest diameters of the respective plate-like particles in the plane direction are determined. From the longest diameters of the respective plate-like particles, D50 as the value at which the cumulative frequency from the small particle size side reaches 50% in the volume-based cumulative particle size distribution is calculated. The resulting D50 is presumed as the primary particle size of the plate-like particles. Through measurement of 100 or more and 200 or less plate-like particles, the thicknesses of the respective plate-like particles are determined. From the thicknesses of the respective plate-like particles, D50 as the value at which the cumulative frequency from the small particle size side reaches 50% in the volume-based cumulative particle size distribution is calculated. The resulting D50 is presumed as the thickness of the plate-like particles. Incidentally, the detail of the measurement method is described in Examples.

The aspect ratio of plate-like particles contained in a titanium phosphate powder is not particularly limited. The aspect ratio of plate-like particles contained in a titanium phosphate powder is preferably 5 or more, more preferably 6 or more, and still more preferably 8 or more. The aspect ratio of plate-like particles contained in a titanium phosphate powder is preferably 100 or less, more preferably 50 or less, and still more preferably 10 or less. In a preferred embodiment of the present invention, examples of the aspect ratio of plate-like particles contained in a titanium phosphate powder include 5 or more and 100 or less, 6 or more and 50 or less, and 8 or more and 10 or less, though the aspect ratio of plate-like particles contained in a titanium phosphate powder is not limited thereto. In the present specification, the aspect ratio of plate-like particles means the ratio of the primary particle size (D50) of plate-like particles relative to the thickness (D50) of plate-like particles (Primary particle size of plate-like particles/Thickness of plate-like particles).

In a titanium phosphate powder, the relation among the particle size D10 of secondary particles at a cumulative frequency of 10% from the small particle size side in the volume-based cumulative particle size distribution, the particle size D50 of secondary particles at a cumulative frequency of 50% from the small particle size side in the volume-based cumulative particle size distribution, and the particle size D90 of secondary particles at a cumulative frequency of 90% from the small particle size side in the volume-based cumulative particle size distribution is more preferred as the value (Particle size D90 of secondary particles-Particle size D10 of secondary particles)/Particle size D50 of secondary particles) decreases. In calculation of the value (Particle size D90 of secondary particles-Particle size D10 of secondary particles)/Particle size D50 of secondary particles, the same units are used for the particle size D10 of secondary particles, the particle size D50 of secondary particles and the particle size D90 of secondary particles, respectively (for example, $\mu$m). Examples of the ranges of calculated value of (Particle size D90 of secondary particles-Particle size D10 of secondary particles)/Particle size D50 of secondary particles include more than 0 and 1.65 or less, more than 0 and 1.6 or less, more than 0 and 1.5 or less, more than 0 and 0.8 or less, and more than 0 and 0.5 or less, though the calculated value is not limited thereto.

The particle sizes D10, D50 and D90 of secondary particles may be measured with a particle size distribution measuring apparatus, respectively, and the detail of the measurement method is described in Examples.

The use application of the titanium phosphate powder is not particularly limited. The titanium phosphate powder may be used in various applications including, for example, a raw material of cosmetics, a white pigment, a functional filler, and a lubricant.

Although the embodiment of the present invention has been described in detail, the description is illustrative and exemplary and not limiting. The scope of the present invention should be interpreted by attached claims.

The present invention includes the following aspects and embodiments.

[1] A method for producing a titanium phosphate powder exhibiting crystallinity of titanium phosphate represented by a chemical formula $Ti(HPO_4)_2 \cdot nH_2O$ ($0 \leq n \leq 1$), and containing plate-like particles, the method including:

putting an acidic raw material aqueous solution containing phosphorus and titanium in a sealed vessel, and storing the sealed vessel containing the raw material aqueous solution for a period of 2 hours or more, with the ambient temperature of the sealed vessel maintained under a constant temperature condition within a range of 40°C or more and less than 100°C,
wherein during the storage, the raw material aqueous solution is not stirred, or during the storage, the raw material aqueous solution is stirred, and
in the case where the raw material aqueous solution is stirred during the storage, a swirl flow rate in stirring the raw material aqueous solution is within a range of more than 0 m/s and 0.30 m/s or less;

[2] The method for producing a titanium phosphate powder according to [1], wherein during the storage, the raw material aqueous solution is not stirred;
[3] The method for producing a titanium phosphate powder according to [1] or [2], wherein a concentration of phosphorus in the raw material aqueous solution relative to a total mass of the raw material aqueous solution is 1 mass% or more and 30 mass% or less;
[4] The method for producing a titanium phosphate powder according to any one of [1] to [3], wherein a concentration of titanium in the raw material aqueous solution is 0.1 mass% or more and 5 mass% or less relative to the total mass of the raw material aqueous solution;
[5] The method for producing a titanium phosphate powder according to any one of [1] to [4], wherein the raw material aqueous solution has a proton concentration per 1 kg of the raw material aqueous solution of 6 mol/kg or more and 14 mol/kg or less;
[6] The method for producing a titanium phosphate powder according to any one of [1] to [5], wherein the raw material aqueous solution is an acidic mixture aqueous solution containing a phosphorus-containing material and a titanium-containing material;

[7] The method for producing a titanium phosphate powder according to [6], wherein the mixture aqueous solution further contains an acid containing no phosphorus and no titanium;

[8] The method for producing a titanium phosphate powder according to any one of [1] to [5] further including preparing the raw material aqueous solution, wherein in the preparation of the raw material aqueous solution, the phosphorus is added as phosphorus-containing material and the titanium is added as titanium-containing material;

[9] The method for producing a titanium phosphate powder according to [8], wherein the preparation of the raw material aqueous solution includes further adding an acid containing no phosphorus and no titanium;

[10] The method for producing a titanium phosphate powder according to any one of [6] to [9], wherein the phosphorus-containing material contains phosphoric acid, a phosphate, or a combination thereof;

[11] The method for producing a titanium phosphate powder according to any one of [6] to [10], wherein the titanium-containing material contains at least one compound selected from the group consisting of titanium sulfate, titanyl sulfate, titanium hydroxide and titanium oxide;

[12] The method for producing a titanium phosphate powder according to [7] or [9], wherein the acid containing no phosphorus and no titanium contains at least one acid selected from the group consisting of hydrochloric acid, sulfuric acid, nitric acid, carbonic acid, acetic acid, citric acid and formic acid;

[13] The method for producing a titanium phosphate powder according to any one of [1] to [12], wherein a ratio of the number of particles having a shape other than the plate-like shape is 20% or less relative to the total number of particles;

[14] A titanium phosphate powder, exhibiting crystallinity of titanium phosphate represented by a chemical formula $Ti(HPO_4)_2 \cdot nH_2O$ ($0 \leq n \leq 1$), and containing plate-like particles, wherein a ratio of the number of particles having a shape other than the plate-like shape is 20% or less relative to the total number of particles.

## Examples

The present invention is described in more detail with reference to the following Examples and Comparative Examples. However, the technical scope of the present invention is not limited to the following Examples only. "%" and "part" mean "mass%" and "part by mass", respectively, unless otherwise specified. Also, in the following Examples, operations were performed under conditions at room temperature (25°C) unless otherwise specified.

<Production of powder>

[Production of powder 1]

In order to obtain a titanium concentration of 1.4 mass% and a phosphorus concentration of 8.8 mass% relative to the total mass of a mixture aqueous solution and a proton concentration per 1 kg of the mixture aqueous solution of 9.3 mol/kg, a titanium sulfate aqueous solution (titanium sulfate aqueous solution containing 8 mass% titanium in terms of titanium dioxide and 35 mass% sulfuric acid) and a 96 mass% sulfuric acid aqueous solution were added to a 85 mass% phosphoric acid aqueous solution while stirring to obtain an acidic mixture aqueous solution (raw material aqueous solution) was obtained.

Acidity of the resulting mixture aqueous solution was checked with a litmus paper (blue) manufactured by Advantec Toyo Kaisha, Ltd., which changed color into red when in contact with the mixture aqueous solution.

The resulting mixture aqueous solution was put into a pressure vessel (sealed vessel) equipped with a full zone shaped stirring blade (full zone blade) and a heater (heating method: electrical heating). The pressure vessel containing the mixture aqueous solution was then stored. Storage of the pressure vessel was performed as follows. For the selection of an ambient temperature of the pressure vessel of 90°C as reference temperature (reference temperature for a constant temperature condition), the period in which the constant temperature condition for the ambient temperature of the pressure vessel continued within a range of 40°C or more and less than 100°C was the longest and the period in which the constant temperature condition for the ambient temperature of the pressure vessel (storage period) continued with 90°C of the ambient temperature of the sealed vessel selected as the reference temperature was 5 hours. During storage, stirring of the mixture aqueous solution in the pressure vessel was not performed. The reaction of the mixture aqueous solution thus proceeded, so that a slurry of composite was obtained.

The ambient temperature of the pressure vessel (sealed vessel) was measured with a thermocouple disposed in the vicinity outside of the heater at intervals of 1 minute.

The resulting slurry of composite was washed with pure water until the electrical conductivity of the solvent in the slurry measured by a table-top type electrical conductivity meter DS-71 manufactured by HORIBA Advanced Techno, Co., Ltd. reached 0.1 mS/cm, and the slurry of composite after washing was dried at 105°C to obtain a composite. The resulting composite was then crushed with a mortar, so that a powder 1 as the powder of the composite was obtained.

[Production of powder 2 and powder 3]

Each of a powder 2 and a powder 3 was obtained in the same manner as in synthesis of the powder 1, except that the pressure vessel containing the mixture aqueous solution was stored while stirring the mixture aqueous solution (raw material aqueous solution) in the pressure vessel. Stirring the mixture aqueous solution in the pressure vessel was performed as follows. The mixture aqueous solution was stirred in the pressure vessel with a full zone shaped stirring blade at a swirl flow rate described in the following Table 1.

[Production of powders 4 to 7]

Each of powders 4 to 7 was obtained in the same manner as in synthesis of the powder 1, except that in order to have a titanium concentration, a phosphorus concentration and a proton concentration in the resulting mixture aqueous solution, respectively, equivalent to the values as described in the following Table 1, the titanium sulfate aqueous solution (titanium sulfate aqueous solution containing 8 mass% titanium in terms of titanium dioxide and 35 mass% sulfuric acid) and the 96 mass% sulfuric acid aqueous solution were added to the 85 mass% phosphoric acid aqueous solution while stirring to obtain an acidic mixture aqueous solution (raw material aqueous solution), and storage of the pressure vessel containing the mixture aqueous solution was performed as follows.

(Storage method in production of powders 4 and 7)

Storage of the pressure vessel was performed as follows. For the selection of an ambient temperature of the pressure vessel described in the following Table 1 as reference temperature (reference temperature for constant temperature conditions), the period in which the constant temperature conditions for the ambient temperature of the pressure vessel continued at a temperature higher than room temperature was the longest and the period in which the constant temperature condition for the ambient temperature of the pressure vessel (storage period) continued with the ambient temperature of the pressure vessel described in the following Table 1 selected as the reference temperature was 150 hours. During storage, stirring of the mixture aqueous solution in the pressure vessel was not performed.

(Storage method in production of powders 5 and 6)

Storage of the pressure vessel was performed as follows. For the selection of an ambient temperature of the pressure vessel described in the following Table 1 as reference temperature (reference temperature for constant temperature conditions), the period in which the constant temperature conditions for the ambient temperature of the pressure vessel continued within a range of 40°C or more and less than 100°C was the longest and the period in which the constant temperature condition for the ambient temperature of the pressure vessel (storage period) continued with the ambient temperature of the pressure vessel described in the following Table 1 selected as the reference temperature was 150 hours. During storage, stirring of the mixture aqueous solution in the pressure vessel was not performed.

[Production of powders 8 to 10]

Each of powders 8 to 10 was obtained in the same manner as in synthesis of the powder 1, except that in order to have a titanium concentration, a phosphorus concentration and a proton concentration in the resulting mixture aqueous solution, respectively, equivalent to the values as described in the following Table 1, the titanium sulfate aqueous solution (titanium sulfate aqueous solution containing 8 mass% titanium in terms of titanium dioxide and 35 mass% sulfuric acid) and the 96 mass% sulfuric acid aqueous solution were added to the 85 mass% phosphoric acid aqueous solution while stirring to obtain an acidic mixture aqueous solution (raw material aqueous solution), and storage of the pressure vessel containing the mixture aqueous solution was performed as follows.

(Storage method in production of Powders 8 to 10)

Storage of the pressure vessel was performed as follows. For the selection of an ambient temperature of the pressure vessel of 90°C as reference temperature (reference temperature for constant temperature conditions), the period in which the constant temperature conditions for the ambient temperature of the pressure vessel continued within a range of 40°C or more and less than 100°C was the longest and the period in which the constant temperature conditions for the ambient temperature of the pressure vessel (storage period) continued with 90°C of the ambient temperature of the sealed vessel selected as the reference temperature was the period described in the following Table 1. During storage, stirring of the mixture aqueous solution in the pressure vessel was not performed.

[Discussion of existing state of titanium in aqueous solution]

It is presumed that the titanium sulfate aqueous solution (titanium sulfate aqueous solution containing 8 mass% titanium in terms of titanium dioxide and 35 mass% sulfuric acid) described above contains titanium ions. It is presumed that each of the mixture aqueous solutions obtained immediately after the above procedure contains titanium ions.

<Evaluation>

[Check of crystallinity]

By powder X-ray diffraction method, each of the powders obtained by the above procedure was subjected to XRD measurement.

According to reference card: 01-079-7347 of titanium phosphate monohydrate (chemical formula: $Ti(HPO_4)_2 \cdot H_2O$) crystal, the highest peak is present in the vicinity of a diffraction angle ($2\theta$) of 25.7°, and the second highest peak is present in the vicinity of a diffraction angle ($2\theta$) of 11.6°. Also, titanium phosphate monohydrate crystal has the highest peak in the vicinity of a diffraction angle ($2\theta$) of 25.7° in the case where the primary particles have a small particle size, or has the highest peak in the vicinity of a diffraction angle ($2\theta$) of 11.6° in the case where the primary particles have a large particle size. In other words, titanium phosphate monohydrate crystal satisfies the following:

having the highest peak in the vicinity of a diffraction angle ($2\theta$) of 11.6°, and the second highest peak in the vicinity of a diffraction angle ($2\theta$) of 25.7°;
having the highest peak in the vicinity of a diffraction angle ($2\theta$) of 25.7°, and the second highest peak in the vicinity of a diffraction angle ($2\theta$) of 11.6°; or
having the highest peaks in the vicinity of a diffraction angle ($2\theta$) of 11.6° and in the vicinity of a diffraction angle ($2\theta$) of 25.7°.

In the present evaluation, in powders 1 to 3 and 5 to 7, the highest peak was identified in the vicinity of a diffraction angle ($2\theta$) of 11.6°, and the second highest peak was identified in the vicinity of a diffraction angle ($2\theta$) of 25.7°; in powders 9 and 10, the highest peak was identified in the vicinity of a diffraction angle ($2\theta$) of 25.7°, and the second highest peak was identified in the vicinity of a diffraction angle ($2\theta$) of 11.6°.

As a result of the present evaluation, it was determined that the powders 1 to 3, 5 to 7, 9 and 10 were titanium phosphate monohydrate crystals (chemical formula: $Ti(HPO_4)_2 \cdot H_2O$). The powders 1 to 3, 5 to 7, 9 and 10 were thus determined to be titanium phosphate powders exhibiting crystallinity of titanium phosphate represented by a chemical formula $Ti(HPO_4)_2 \cdot nH_2O$ ($0 \leq n \leq 1$).

The details of XRD measurement are shown in the following.

<<XRD measurement condition>>

Measurement apparatus: multipurpose X-ray diffraction system with horizontal sample mounting Ultima IV manufactured by Rigaku Corporation

X-ray: 20 kV/10 mA
Divergence slit: 1°
Divergence vertical limit slit: 10 mm
Scattering slit: 2°
Light receiving slit: 0.05 mm
k$\beta$ Filter
Start: 10
Stop: 70
Step: 0.01
Standard card: 01-079-7347

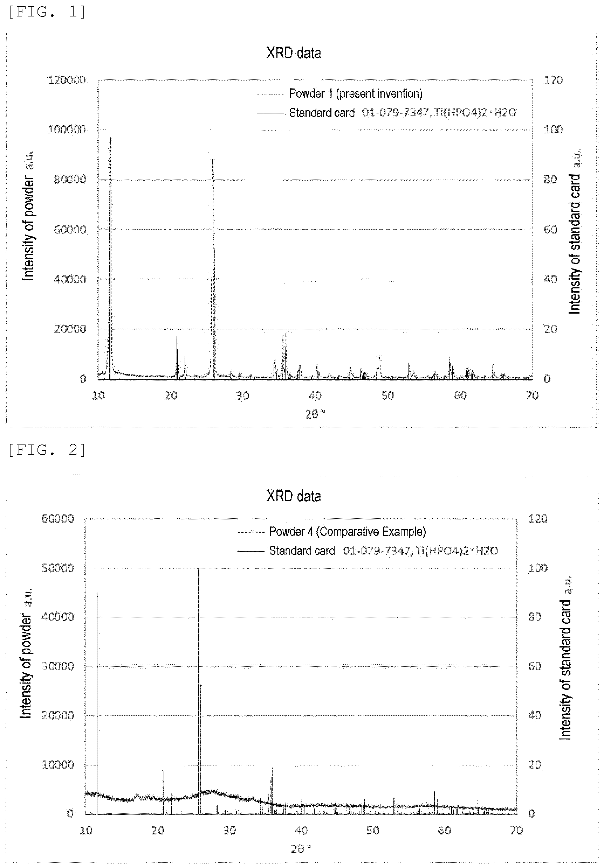

According to the XRD measurement, measurement results of the powder 1 of the present invention and measurement results of the standard card: 01-079-7347 are shown in FIG. 1. According to the XRD measurement, measurement results of the powder 4 in Comparative Example and measurement results of the reference card: 01-079-7347 are shown in FIG. 2.

[Ratio of number of particles having shape other than plate-like shape relative to total number of particles]

Among the resulting powders, each of the powders of which crystallinity confirmed with the XRD measurement were subjected to evaluation on the ratio of the number of particles having a shape other than the plate-like shape relative to the total number of particles.

The powder was suspended in methanol, dropped on an aluminum foil, and then dried at room temperature to prepare a measurement sample. An SEM image of the measurement sample was photographed with a scanning electron microscope (SEM) (SU8000 manufactured by Hitachi High-Tech Corporation) with a magnification for photographing 100 or more and 1000 or less particles. From the SEM image, it was confirmed that the particles composing the powder of which crystallinity confirmed with the XRD measurement were mainly plate-like particles. Then, the shapes of the whole particles in the SEM image were checked and the ratio (%) of the number of particles having a shape other than the plate-like shape in the SEM image relative to the total number of particles in the SEM image (=Number of particles having a shape other than the plate-like shape in SEM image/Total number of particles in SEM image x 100) was calculated. The calculated value was presumed as the ratio (%) of the number of particles having a shape other than the plate-like shape relative to the total number of particles in the powder. The criteria for the ratio of the number of particles having a shape other than the plate-like shape relative to the total number of particles in the powder are shown in the following.

<<Evaluation criteria>>

A: The ratio of the number of particles having a shape other than the plate-like shape relative to the total number of particles is 0%.

B: The ratio of the number of particles having a shape other than the plate-like shape relative to the total number of particles is more than 0% and 20% or less.

C: The ratio of the number of particles having a shape other than the plate-like shape relative to the total number of particles is more than 20%.

In the present evaluation, each of the particles in the SEM image were classified into plate-like particles or particles having a shape other than the plate-like shape. The ratio (%) of the number of plate-like particles relative to the total number of particles in the powder was checked by calculation of "100(%)-Ratio (%) of number of particles having a shape other than the plate-like shape in SEM image relative to total number of particles in SEM image". In the present evaluation, the ratio of the number of plate-like particles relative to the total number of particles in the powder evaluated as "A" or "B" was 80% or more, so that it was determined that these powders, particularly the powders evaluated as "A" had a high abundance ratio of plate-like particles in the powder.

Alternatively, the ratio (%) of the number of plate-like particles relative to the total number of particles may be checked by calculation of the ratio (%) of the number of plate-like particles in an SEM image relative to the total number of particles in the SEM image (=Number of plate-like particles in SEM image/Total number of particles in SEM image x 100).

[Primary particle size (D50) of plate-like particles and thickness (D50) of plate-like particles]

Among the resulting powders, each of the powders of which crystallinity confirmed with the XRD measurement were subjected to evaluation on the primary particle size of plate-like particles and thickness of plate-like particles. The powder was suspended in methanol, dropped on an aluminum foil, and then dried at room temperature to prepare a measurement sample. An SEM image of the measurement sample was photographed several times with a scanning electron microscope (SEM) (SU8000 manufactured by Hitachi High-Tech Corporation) with a magnification for photographing 50 or more and 100 or less particles at randomly different positions. Subsequently, the plate-like particles in the resulting SEM images were measured using an image analysis software "Mac-View ver. 4" manufactured by Mountech Co., Ltd. Through measurement of 100 or more and 200 or less plate-like particles, the longest diameters of the respective plate-like particles in the plane direction were determined, and through measurement of 100 or more and 200 or less plate-like particles, the thickness of the respective plate-like particles were determined. From the longest diameters of the respective plate-like particles in the plane direction, D50 as the value at which the cumulative frequency from the small particle size side reaches 50% in the volume-based cumulative particle size distribution was calculated. The resulting D50 ($\mu$m) was presumed as the primary particle size ($\mu$m) of the plate-like particles. Also, from the thicknesses of the respective plate-like particles, D50 as the value at which the cumulative frequency from the small particle size side reaches 50% in the volume-based cumulative particle size distribution was calculated. The resulting D50 was presumed as the thickness ($\mu$m) of the plate-like particles.

In the measurement, the longest diameter in the plane direction of the plate-like particles was presumed as the length of the long side of a quadrangle with the longest side length among quadrangles (rectangles or squares) circumscribing the plate-like particle. Here, the quadrangle with the longest side length is a quadrangle with the longest side (long side) length among quadrangles obtained by calculating quadrangles circumscribing a selected plate-like particle at each rotation angle while the selected plate-like particle is rotated 360°.

From the primary particle size ($\mu$m) of the plate-like particles and the thickness ($\mu$m) of the plate-like particles obtained in the measurement, the aspect ratio of the plate-like particles (=Primary particle size of plate-like particles ($\mu$m)/Thickness of plate-like particles ($\mu$m)) was calculated.

[Particle size distribution of secondary particles]

Among each of the powders thus obtained, the particle size distribution of secondary particles of each of the powders with crystallinity confirmed by XRD measurement was evaluated. Using pure water as dispersing medium, the powder was subjected to measurement by a particle size distribution measuring apparatus LA-950 (manufactured by HORIBA, Ltd.). The measurement conditions include a refraction index of dispersing medium of 1.33, a refraction index of particles of 1.45, and a particle absorption rate of 0. From the cumulative frequency of particle sizes of individual particles, the particle size D10 ($\mu$m) of secondary particles at a cumulative frequency of 10% from the small particle size side in the volume-based cumulative particle size distribution, the particle size D50 ($\mu$m) of secondary particles at a cumulative frequency of 50% from the small particle size side in the volume-based cumulative particle size distribution, and the particle size D90 ($\mu$m) of secondary particles at a cumulative frequency of 90% from the small particle size side in the volume-based cumulative particle size distribution were calculated. Subsequently, using the particle size D10 ($\mu$m) of secondary particles, the particle size D50 ($\mu$m) of secondary particles, and the particle size D90 ($\mu$m) of secondary particles thus calculated, (Particle size D90 of secondary particles-Particle size D10 of secondary particles)/Particle size D50 of secondary particles was calculated to obtain a calculated value. The smaller the calculated value is, the narrower the particle size distribution is. With a calculated value of 1.65 or less, the particle size distribution was determined to be sufficiently narrow.

Regarding the powders 1 to 10, the production conditions were summarized in Table 1, and the evaluation results were summarized in Table 2, respectively.

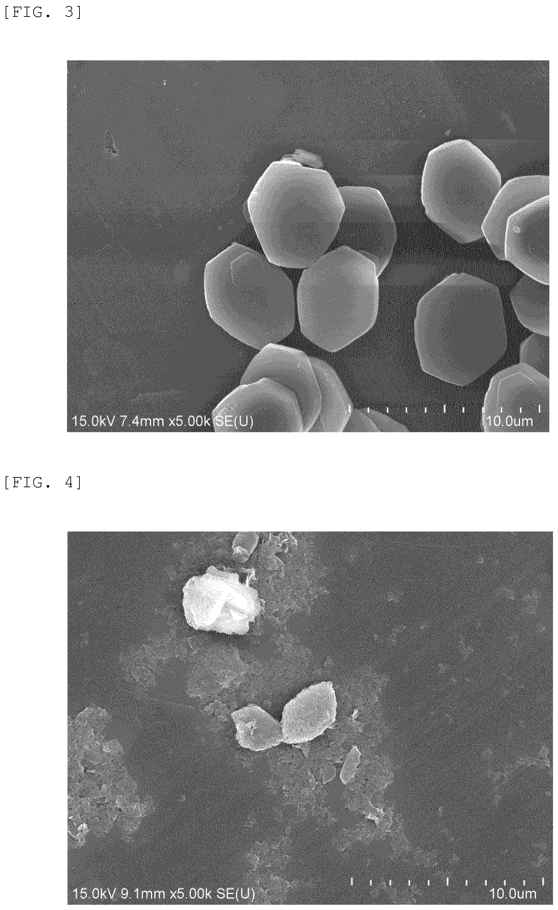

SEM images of the powder 1 and powder 4 which were photographed with a scanning electron microscope (SEM) (SU8000 manufactured by Hitachi High-Tech Corporation) with a magnification for easy identification of the particle shape in the powder are shown in FIG. 3 and FIG. 4. The SEM image of the powder 1 of the present invention is shown in FIG. 3. The SEM image of the powder 4 of Comparative Example is shown in FIG. 4.

[Table 1]

(Table 1) Production condition for each powder

| Powder | Mixture aqueous solution (Raw material aqueous solution) | | | Storage condition under constant temperature condition | | | | Remarks |
| --- | --- | --- | --- | --- | --- | --- | --- | --- |
| | Concentration in mixture aqueous solution (raw material aqueous solution) | | | | | | | |
| | Titanium [mass%] | Phosphorus [mass%] | Proton [mol/kg] | Reference temperature [°C] | Storage period [hour] | Presence or absence of stirring | Swirl flow rate [m/s] | |
| 1 | 1.4 | 8.8 | 9.3 | 90 | 5 | absent | 0 | Present invention |
| 2 | 1.4 | 8.8 | 9.3 | 90 | 5 | present | 0.26 | Present invention |
| 3 | 1.4 | 8.8 | 9.3 | 90 | 5 | present | 0.35 | Comparative Example |

(continued)

| Powder | Mixture aqueous solution (Raw material aqueous solution) | | | Storage condition under constant temperature condition | | | | Remarks |
|---|---|---|---|---|---|---|---|---|
| | Concentration in mixture aqueous solution (raw material aqueous solution) | | | | | | | |
| | Titanium [mass%] | Phosphorus [mass%] | Proton [mol/kg] | Reference temperature [°C] | Storage period [hour] | Presence or absence of stirring | Swirl flow rate [m/s] | |
| 4 | 1.4 | 9.2 | 9.6 | 30 | 150 | absent | 0 | Comparative Example |
| 5 | 1.4 | 9.2 | 9.6 | 43 | 150 | absent | 0 | Present invention |
| 6 | 1.4 | 9.2 | 9.6 | 90 | 150 | absent | 0 | Present invention |
| 7 | 1.4 | 9.2 | 9.6 | 130 | 150 | absent | 0 | Comparative Example |
| 8 | 1.4 | 9.5 | 9.9 | 90 | 1 | absent | 0 | Comparative Example |
| 9 | 1.4 | 9.5 | 9.9 | 90 | 5 | absent | 0 | Present invention |
| 10 | 1.4 | 9.5 | 9.9 | 90 | 20 | absent | 0 | Present invention |

[Table 2]

**(Table 2) Evaluation result of each powder**

| Powder | Evaluation | | | | | | | Remarks |
|---|---|---|---|---|---|---|---|---|
| | Check of crystallinity | Ratio of number of particles having a shape other than the plate-like shape relative to total number of particles | | Plate-like particles | | | Calculated value of (D90-D10)/D50 of secondary particles | |
| | | | | Particle size of primary particles [μm] | Thickness [μm] | Aspect ratio | | |
| | | [%] | Evaluation | | | | | |
| 1 | Crystal | 5 | B | 5 | 0.8 | 6 | 0.7 | Present invention |
| 2 | Crystal | 10 | B | 5 | 0.8 | 6 | 0.7 | Present invention |
| 3 | Crystal | 30 | C | 5 | 0.8 | 6 | 1.3 | Comparative Example |
| 4 | Amorphous | No evaluation was performed. | | | | | | Comparative Example |
| 5 | Crystal | 0 | A | 3 | 0.4 | 8 | 0.8 | Present invention |

(continued)

| Powder | Evaluation | | | | | | | Remarks |
|---|---|---|---|---|---|---|---|---|
| | Check of crystallinity | Ratio of number of particles having a shape other than the plate-like shape relative to total number of particles | | Plate-like particles | | | Calculated value of (D90-D10) /D50 of secondary particles | |
| | | | | Particle size of primary particles [μm] | Thickness [μm] | Aspect ratio | | |
| | | [%] | Evaluation | | | | | |
| 6 | Crystal | 0 | A | 3 | 0.4 | 8 | 0.8 | Present invention |
| 7 | Crystal | 25 | C | 3 | 0.4 | 8 | 1.2 | Comparative Example |
| 8 | Amorphous | No evaluation was performed. | | | | | | Comparative Example |
| 9 | Crystal | 0 | A | 0.3 | 0.03 | 10 | 0.5 | Present invention |
| 10 | Crystal | 0 | A | 0.3 | 0.03 | 10 | 0.5 | Present invention |

From Table 1 and Table 2, it has been confirmed that the powders 1, 2, 5, 6, 9 and 10 of the present invention are each a titanium phosphate powder exhibiting crystallinity of titanium phosphate represented by a chemical formula $Ti(HPO_4)_2 \cdot nH_2O$ ($0 \leq n \leq 1$) and containing plate-like particles, and having reduced formation of byproducts other than the plate-like particles of titanium phosphate. According to the production method of the present invention, homogeneous plate-like titanium phosphate particles may be produced.

In contrast, it has been confirmed that both of the powder 3 and powder 7 produced by production methods of Comparative Example, which are out of the scope of the present invention, tend to form byproducts other than the plate-like particles of titanium phosphate, though exhibiting crystallinity. Also, it has been confirmed that both of the powder 4 and powder 8 produced by production methods of Comparative Example, which are out of the scope of the present invention, exhibit no crystallinity.

This application is based on Japanese Patent Application No. 2022-105785 filed on June 30, 2022 and Japanese Patent Application No. 2023-83035 filed on May 19, 2023, the contents of which are incorporated herein by reference in its entirety.

**Claims**

1. A method for producing a titanium phosphate powder exhibiting crystallinity of titanium phosphate represented by a chemical formula $Ti(HPO_4)_2 \cdot nH_2O$ ($0 \leq n \leq 1$), and containing plate-like particles, the method comprising:

   putting an acidic raw material aqueous solution containing phosphorus and titanium in a sealed vessel, and storing the sealed vessel containing the raw material aqueous solution for a period of 2 hours or more, with the ambient temperature of the sealed vessel maintained under a constant temperature condition within a range of 40°C or more and less than 100°C,
   wherein during the storage, the raw material aqueous solution is not stirred, or during the storage, the raw material aqueous solution is stirred, and
   in the case where the raw material aqueous solution is stirred during the storage, a swirl flow rate in stirring the raw material aqueous solution is within a range of more than 0 m/s and 0.30 m/s or less.

2. The method for producing a titanium phosphate powder according to claim 1, wherein during the storage, the raw material aqueous solution is not stirred.

3. The method for producing a titanium phosphate powder according to claim 1 or 2, wherein a concentration of phosphorus in the raw material aqueous solution relative to a total mass of the raw material aqueous solution is 1 mass% or more and 30 mass% or less.

4. The method for producing a titanium phosphate powder according to any one of claims 1 to 3, wherein a concentration of titanium in the raw material aqueous solution is 0.1 mass% or more and 5 mass% or less relative to a total mass of the raw material aqueous solution.

5. The method for producing a titanium phosphate powder according to any one of claims 1 to 4, wherein the raw material aqueous solution has a proton concentration per 1 kg of the raw material aqueous solution of 6 mol/kg or more and 14 mol/kg or less.

6. The method for producing a titanium phosphate powder according to any one of claims 1 to 5, wherein the raw material aqueous solution is an acidic mixture aqueous solution containing a phosphorus-containing material and a titanium-containing material.

7. The method for producing a titanium phosphate powder according to claim 6, wherein the mixture aqueous solution further contains an acid containing no phosphorus and no titanium.

8. The method for producing a titanium phosphate powder according to any one of claims 1 to 5 further comprising preparing the raw material aqueous solution, wherein in the preparation of the raw material aqueous solution, the phosphorus is added as phosphorus-containing material and the titanium is added as titanium-containing material.

9. The method for producing a titanium phosphate powder according to claim 8, wherein the preparation of the raw material aqueous solution includes further adding an acid containing no phosphorus and no titanium.

10. The method for producing a titanium phosphate powder according to any one of claims 6 to 9, wherein the phosphorus-containing material contains phosphoric acid, a phosphate, or a combination thereof.

11. The method for producing a titanium phosphate powder according to any one of claims 6 to 10, wherein the titanium-containing material contains at least one compound selected from the group consisting of titanium sulfate, titanyl sulfate, titanium hydroxide and titanium oxide.

12. The method for producing a titanium phosphate powder according to claim 7 or 9, wherein the acid containing no phosphorus and no titanium contains at least one acid selected from the group consisting of hydrochloric acid, sulfuric acid, nitric acid, carbonic acid, acetic acid, citric acid and formic acid.

13. The method for producing a titanium phosphate powder according to any one of claims 1 to 12, wherein a ratio of the number of particles having a shape other than the plate-like shape is 20% or less relative to the total number of particles.

14. A titanium phosphate powder, exhibiting crystallinity of titanium phosphate represented by a chemical formula $Ti(HPO_4)_2 \cdot nH_2O$ $(0 \leq n \leq 1)$, and containing plate-like particles, wherein a ratio of the number of particles having a shape other than the plate-like shape is 20% or less relative to the total number of particles.

[FIG. 1]

[FIG. 2]

[FIG. 3]

[FIG. 4]

Europäisches
Patentamt

European
Patent Office

Office européen
des brevets

# EUROPEAN SEARCH REPORT

**Application Number**

EP 23 18 2482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 984 950 A1 (FUJIMI INC [JP]) 20 April 2022 (2022-04-20) | 14 | INV. $C01B25/26$ $C01B25/37$ |
| A | * paragraphs [0016] – [0041]; claims 1-7; figure 6; table 1 * | 1-13 | |
| X | EP 3 919 440 A1 (FUJIMI INC [JP]) 8 December 2021 (2021-12-08) | 14 | |
| A | * paragraphs [0015] – [0039]; claims 1-6; figures 6,7,10; table 1 * | 1-13 | |
| X | EP 3 854 753 A1 (FUJIMI INC [JP]) 28 July 2021 (2021-07-28) | 14 | |
| A | * paragraphs [0038] – [0043]; figures 1-2; example 1; table 1 * | 1-13 | |
| A | ONODA HIROAKI ET AL: "Influence of concentration in phosphoric acid treatment of titanium oxide and their powder properties", JOURNAL OF ASIAN CERAMIC SOCIETIES, vol. 3, no. 1, 1 March 2015 (2015-03-01), pages 27-31, XP055841302, DOI: 10.1016/j.jascer.2014.10.003 * "Experimental" Results and discussion" * | 1-14 | **TECHNICAL FIELDS SEARCHED (IPC)** C01B |

The present search report has been drawn up for all claims

| Place of search | Date of completion of the search | Examiner |
|---|---|---|
| The Hague | 13 November 2023 | Corrias, M |

EPO FORM 1503 03.82 (P04C01)

## ANNEX TO THE EUROPEAN SEARCH REPORT
## ON EUROPEAN PATENT APPLICATION NO.

EP 23 18 2482

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2023

| Patent document cited in search report | | | Publication date | Patent family member(s) | | | Publication date |
|---|---|---|---|---|---|---|---|
| EP 3984950 | A1 | | 20-04-2022 | CN | 110461765 | A | 15-11-2019 |
| | | | | CN | 111994888 | A | 27-11-2020 |
| | | | | CN | 112499611 | A | 16-03-2021 |
| | | | | EP | 3604218 | A1 | 05-02-2020 |
| | | | | EP | 3984950 | A1 | 20-04-2022 |
| | | | | ES | 2908725 | T3 | 03-05-2022 |
| | | | | JP | 6660078 | B2 | 04-03-2020 |
| | | | | JP | 7165469 | B2 | 04-11-2022 |
| | | | | JP | 2020079284 | A | 28-05-2020 |
| | | | | JP | WO2018180797 | A1 | 07-11-2019 |
| | | | | KR | 20190113990 | A | 08-10-2019 |
| | | | | KR | 20200133007 | A | 25-11-2020 |
| | | | | KR | 20210012061 | A | 02-02-2021 |
| | | | | PL | 3604218 | T3 | 18-07-2022 |
| | | | | US | 2020377369 | A1 | 03-12-2020 |
| | | | | US | 2022144639 | A1 | 12-05-2022 |
| | | | | WO | 2018180797 | A1 | 04-10-2018 |
| EP 3919440 | A1 | | 08-12-2021 | CN | 113365941 | A | 07-09-2021 |
| | | | | EP | 3919440 | A1 | 08-12-2021 |
| | | | | JP | WO2020158332 | A1 | 25-11-2021 |
| | | | | KR | 20210116492 | A | 27-09-2021 |
| | | | | US | 2022096342 | A1 | 31-03-2022 |
| | | | | WO | 2020158332 | A1 | 06-08-2020 |
| EP 3854753 | A1 | | 28-07-2021 | CN | 112739647 | A | 30-04-2021 |
| | | | | EP | 3854753 | A1 | 28-07-2021 |
| | | | | JP | 7177169 | B2 | 22-11-2022 |
| | | | | JP | WO2020059190 | A1 | 30-08-2021 |
| | | | | KR | 20210062013 | A | 28-05-2021 |
| | | | | US | 2022023170 | A1 | 27-01-2022 |
| | | | | WO | 2020059190 | A1 | 26-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 49001720 B
- WO 2018180797 A
- US 20200377369
- JP 2000007311 A
- JP 2022105785 A
- JP 2023083035 A

### Non-patent literature cited in the description

- Stirring Technology. Satake Chemical Equipment MFG., Ltd, 1992